# FASCICULE DE BREVET EUROPEEN

(11) **EP 1 597 180 B1**
(45) Date de publication et mention de la délivrance du brevet: **03.10.2012**
(21) Numéro de dépôt: 04708792.9
(22) Date de dépôt: 06.02.2004
(51) Int. Cl.: B65H 29/58, B65H 5/26, H04N 1/00

(54) **SELECTEUR MECANIQUE**
MECHANISCHE WEICHE
MECHANICAL SELECTOR

(30) Priorité: 06.02.2003 FR 0301407
(43) Date de publication de la demande: 23.11.2005
(73) Titulaire: SAGEMCOM DOCUMENTS SAS, 92500 Rueil Malmaison (FR)
(72) Inventeur: SIRON, Daniel, F-95800 Courdimanche (FR)
(74) Mandataire: Bloch, Gérard
(86) Numéro de dépôt international: PCT/FR2004/000273
(87) Numéro de publication internationale: WO 2004/071918

(56) Documents cités:
- EP-A- 0 637 162
- PATENT ABSTRACTS OF JAPAN vol. 1998, no. 10, 31 août 1998 (1998-08-31) & JP 10 120232 A (SEIKO EPSON CORP), 12 mai 1998 (1998-05-12)
- PATENT ABSTRACTS OF JAPAN vol. 1997, no. 08, 29 août 1997 (1997-08-29) & JP 09 106116 A (RICOH CO LTD), 22 avril 1997 (1997-04-22)
- PATENT ABSTRACTS OF JAPAN vol. 2002, no. 05, 3 mai 2002 (2002-05-03) & JP 2002 029666 A (KONICA CORP), 29 janvier 2002 (2002-01-29)

## Description

### DOMAINE TECHNIQUE DE L'INVENTION

L'invention concerne un dispositif mécanique de commande d'un organe basculant entre deux positions. Elle vise aussi l'application de ce dispositif à une machine pour le traitement de feuilles de papier comportant un système de lecture ou d'impression feuille à feuille.

### ARRIERE PLAN TECHNOLOGIQUE DE L'INVENTION

On connaît des moyens de guidage, notamment à l'intérieur de télécopieurs, permettant de faire circuler recto-verso les feuilles de papier devant une tête de lecture optique ou d'impression thermique unique.

Dans ces moyens de guidage, on prévoit par exemple de faire basculer les têtes d'une position recto de la feuille à traiter à une position verso ou bien de retourner la feuille de papier au moyen d'un tambour intermédiaire. On connaît aussi des moyens de guidage qui font emprunter aux feuilles des chemins différents selon les étapes de traitement.

On peut par exemple utiliser un volet de guidage que l'on fait basculer entre deux positions.

Pour la commande de ce volet, divers moyens sont possibles. Par exemple on peut utiliser un mécanisme comportant un électro-aimant ou une came, coopérant ou non avec un ressort de rappel. On connaît aussi la possibilité de mettre en oeuvre une commande directe sur friction ou une prise directe sur un moteur spécifique.

Cependant ces divers moyens de commande présentent chacun des inconvénients. L'emploi d'un électro-aimant avec ou non un ressort de rappel est onéreux. La prise directe sur un moteur dédié à cette fonction se révèle être une solution très onéreuse et difficile à mettre en oeuvre. Un système à came et ressort de rappel implique la mise en place d'un engrenage démultiplicateur; en outre le temps de passage d'une position à l'autre est long. La commande directe sur friction présente quant à elle un problème de fiabilité et de longévité de la friction.

Ces dispositifs sont donc relativement complexes, coûteux ou à terme peu fiables.

Le problème concernant la commande d'un volet de guidage à l'intérieur d'une machine de traitement de feuilles est commun à celui concernant la commande de tout organe mécanique basculant entre deux positions.

On connaît par exemple le document JP 10 120232 A concernant un dispositif de transport de feuilles dans un distributeur de billets automatique.

Le dispositif est caractérisé par le fait qu'il comprend un disque denté de commande dudit organe, entraîné en rotation autour d'un premier axe par un pignon moteur, tournant autour d'un second axe, par l'intermédiaire d'au moins un pignon satellite dudit pignon moteur, et engrenant sur le disque denté, le disque denté comprenant au moins un évidemment formant dégagement de denture pour le satellite, ledit pignon moteur pouvant tourner dans les deux sens de rotation, le basculement depuis une position correspondant à l'engagement du satellite dans l'évidement vers l'autre position étant obtenu par inversion du sens de rotation du pignon moteur, désengagement du satellite et engrènement du satellite sur la denture du pignon jusqu'à venir s'engager dans le dit évidement.

### DESCRIPTION GENERALE DE L'INVENTION

L'invention porte sur une machine de traitement de feuilles de papier avec un système de lecture ou d'impression feuille à feuille comportant des moyens d'entraînement des feuilles, un chemin de traitement relié à un chemin d'entrée et une tête de lecture ou d'impression, un premier chemin de sortie en parallèle avec un deuxième chemin de sortie, un volet d'aiguillage des feuilles soit vers le premier chemin de sortie, soit vers le deuxième chemin de sortie. La machine est caractérisée par le fait que le volet d'aiguillage est commandé par le dispositif de commande présenté ci-dessus, et en ce que le pignon moteur est constitué par le moyen d'entraînement des feuilles vers l'un ou l'autre des chemins de sortie.

De préférence, le pignon moteur est associé à deux pignons satellites, chacun engrenant avec le disque denté selon le sens de rotation, et en particulier le disque denté comprend deux évidements formant des dégagements de denture correspondant chacun à une desdites positions.

Avantageusement, le disque denté est mobile entre deux butées et coopère avec un moyen ressort pour le maintenir en appui stable contre une butée.

La solution de l'invention présente donc l'avantage d'être simple. Les composants du dispositif : disque et roues dentées, ressort, sont élémentaires et standards. Elle est donc peu onéreuse.

Par ailleurs, grâce à la présence des évidements, le pignon moteur peut continuer à tourner lorsqu'une position a été atteinte sans créer des efforts de friction sur les satellites, puisque ceux-ci ne sont plus en prise avec le disque denté. Cette structure n'implique donc pas de problème d'usure.

L'expérience a montré aussi que le passage d'une position à l'autre était très rapide, et le maintien en position stable et permanent.

Enfin cette solution trouve une application particulièrement avantageuse dans une machine de traitement de feuilles de papier dans la mesure où le basculement est associé à la rotation d'un pignon moteur qui peut être lui-même entraîné par un organe moteur commun à l'ensemble des fonctions de la machine.

Conformément à une autre caractéristique, le système de lecture ou d'impression recto-verso feuille à feuille comporte en outre un chemin de retour entre le volet d'aiguillage et le chemin d'entrée.

### BREVE DESCRIPTION DES DESSINS

L'invention sera mieux comprise à l'aide de la description suivante et du dessin sur lequel
- la figure 1 représente une vue en bout du dispositif de commande selon l'invention dans ses différentes phases de fonctionnement,
- la figure 2 représente un schéma de principe du système de lecture ou d'impression,
- la figure 3 montre le cheminement des feuilles pour un traitement recto-verso,
- la figure 4 représente une variante de réalisation du dispositif de commande.

### DESCRIPTION DES MODES D'EXECUTION PREFERES DE L'INVENTION

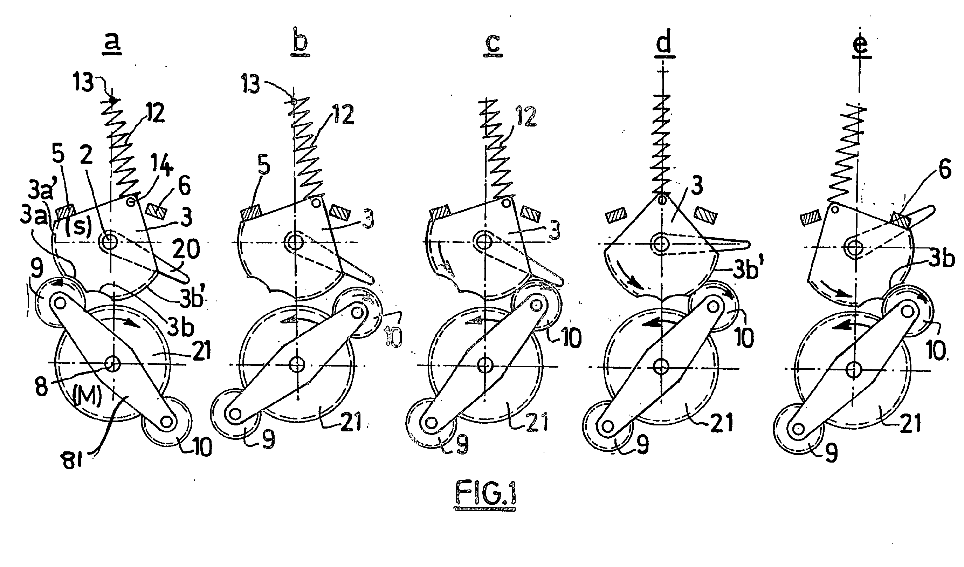

La figure 1 représente de façon schématique le dispositif de commande dans les différentes phases de passage d'un position à une autre. On se reporte tout d'abord à la figure 1 (a). Le dispositif a pour fonction de commander ici le basculement d'un volet 20 entre deux positions autour d'un axe 2. Il est composé d'un disque ou d'un secteur de disque denté 3 à sa périphérie. Ce disque 3 pivote autour de l'axe 2 et est solidaire du volet 20. Il peut pivoter entre deux positions extrêmes déterminée par deux butées fixes 5 et 6. Le disque denté 3 est maintenu en appui contre sa butée 5 ou 6 par un ressort 12. Dans le mode de réalisation représenté, le ressort est fixé à un point fixe 13 par une extrémité et au disque denté en 14 par l'autre. Le ressort est comprimé. De cette façon, lorsque le disque 3 est en place contre la butée 5, comme cela est représenté, le ressort exerce une force d'appui. Un pignon moteur 21 est entraîné par des moyens moteurs non représentés autour d'un axe 8, parallèle à l'axe 2. Le point fixe 13 est dans le même plan que les axes 2 et 8.

Le pignon 21 est équipé de deux pignons satellites 9 et 10 qui sont montés sur et maintenus en opposition par un bras baladeur 81 qui pivote autour de l'axe 8. Les deux satellites sont agencés pour engrener sur le disque denté 3 selon la position du baladeur. Le disque denté 3 comporte en outre deux évidements 3a et 3b qui constituent des dégagements de denture pour les satellites 9 et 10 respectivement, en fin de deux arcs d'engrenage 3a' et 3b'comme cela est décrit ci-après.

On se reporte maintenant aux figures 1(a) à (e) pour le fonctionnement du dispositif.

Dans la position 1(a) le volet 20 est dirigé vers le bas. Le pignon 21 tourne dans le sens indiqué ou ne tourne pas. S'il est en rotation le satellite 9 tourne librement dans l'évidemment 3 a. Le disque 3 est maintenu en butée 5 par le ressort 12.

Dans la position 1(b), on a inversé le sens de rotation du moteur ; le pignon tourne dans le sens inverse. Il entraîne le dégagement du satellite 9.

Dans la position 1(c), le satellite 10 engrène sur le disque denté 3. Il entraîne le disque 3 qui commence à pivoter autour de son axe 2.

Dans la position 1(d), le ressort 12 est dans le plan commun avec les axes 2 et 8. Le satellite 10 parcourt l'arc d'engrenage 3b'.

Dans la position 1(e), le dispositif a atteint sa deuxième position stable ; le satellite est calé dans l'évidemment 3b dans lequel il tourne librement. Le disque est en appui contre la butée 6 par la force du ressort 12. Le volet est dirigé vers le haut dans une position stable.

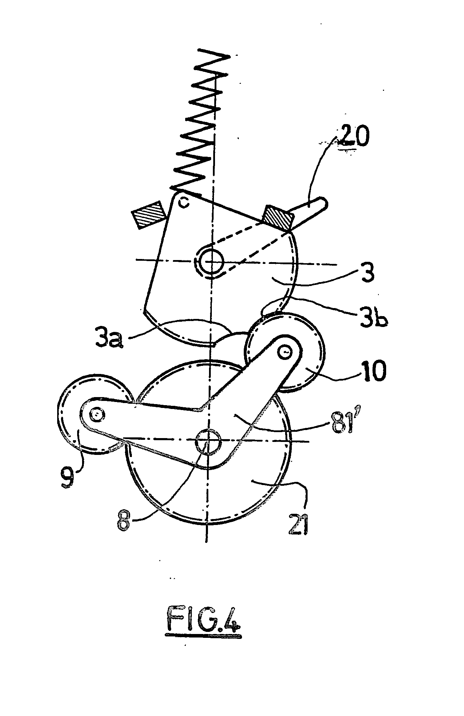

On a représenté sur la figure 1 un mécanisme de pignon moteur avec un bras baladeur 81 rectiligne. Il entre bien sûr dans le cadre de l'invention d'autres modes de réalisation tel que celui représenté sur la figure 4 où le bras baladeur 81' forme un angle. Selon cette variante, le dispositif de basculement réagit plus rapidement quand le pignon moteur change de sens de rotation.

On décrit maintenant une application du dispositif à la commande d'un volet de guidage dans une machine de traitement de feuilles de papier.

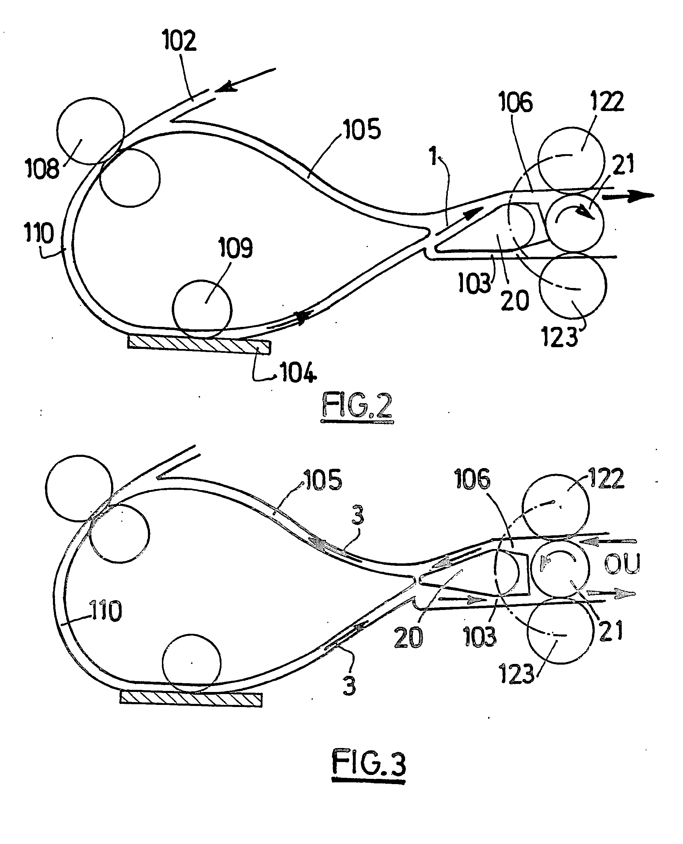

En référence à la figure 2, la machine comprend un système 100 de lecture ou d'impression composé d'un chemin d'entrée 102 de feuilles de papier extraites une par une d'un magasin non représenté. Chaque feuille est entraînée séparément par des rouleaux d'entraînement 108, 109 le long d'un chemin de traitement 110 pour être amené sur une tête 104 d'impression ou d'analyse et y être traitée côté recto. Ce chemin 110 est prolongé par un premier chemin de sortie 106 et un deuxième chemin de sortie 103, parallèlement au premier chemin de sortie.

Entre les deux chemins 103 et 106 est prévu un dispositif de commande d'un volet d'aiguillage basculant 20. Ce volet guide la feuille provenant de la tête 104 soit vers la sortie 103 soit vers la sortie 106. Après avoir passé la sortie 103, la feuille est éjectée dans un magasin de réception, non représenté, par les moyens d'entraînement 123. Après avoir passé la première sortie 106, la feuille est soit éjectée dans le magasin de réception, soit envoyée en boucle à partir de cette première sortie 106 sur le chemin d'entrée 102. Dans ce cas, la feuille passe dans un chemin de retour 105, après changement de position du volet d'aiguillage 20. Elle est alors entraînée par les moyens d'entraînement 122 qui ont changé de sens de rotation. Un pignon moteur 21 unique entraîne les moyens 122, 123 et le dispositif de commande du volet d'aiguillage.

Le fonctionnement du système va maintenant être expliqué.

Quand une feuille est introduite dans le chemin d'entrée 102, elle est entraînée par les rouleaux d'entraînement dans le chemin de traitement 110, traitée, puis entraînée par les moyens d'entraînement 109 vers la première sortie 106. Le volet d'aiguillage est dans une position (a) repérée sur la figure 2 et commandé par le dispositif de commande dans une configuration telle qu'indiquée en figure 1(a). Sur cette figure, on voit la position particulière du satellite 9, qui tourne à vide dans l'évidemment 3a.

A partir de cette position, le pignon moteur peut tourner dans les deux sens : un sens d'éjection de la feuille par la première sortie 106 vers le magasin de réception non représenté, et un sens de retour en boucle vers le chemin 105 de retour.

Dans le premier cas, cheminement selon les flèches 1 de la figure 2, on a effectué un traitement recto seul de la feuille.

Dans le second cas, on réitère le traitement pour le verso de la feuille.

Dans ce but, le pignon moteur 21, qui était tournant dans le sens d'éjection en fin de traitement recto pour entraîner la feuille dans le premier chemin de sortie, reçoit, pour une option de traitement recto-verso choisie par l'opérateur, une commande d'inversion de sens de rotation pour effectuer ledit retour en boucle. Ce changement de sens de rotation provoque, voir figures 1(b) à 1 (e), le pivotement du bras baladeur, entraîné par les satellites 9, 10. Le satellite 9 se dégage du secteur de l'évidemment 3a et le satellite 10 vient engrener dans l'engrenage 3b' du secteur, comme on le voit sur la figure 1(c). La rotation du satellite 10 provoque le basculement du disque 3 de sa position de la figure 1(c), d'appui sur la butée 5, à sa position de la figure 1(e) d'appui sur la butée symétrique 6. Cette position est atteinte lorsque le satellite 10 atteint l'évidemment 3b. Il est aidé par le ressort 12 qui maintient par ailleurs le secteur de disque denté dans sa nouvelle position. Le pignon moteur 21 et les rouleaux d'entraînement associés en rotation, non entravés grâce à l'évidemment 3b, entraînent la feuille dans le chemin de retour en boucle 105, grâce à la nouvelle position (e) du volet d'aiguillage. On a indiqué le cheminement par les flèches 3 en figure 3. En fin de traitement, une nouvelle commande du volet d'aiguillage n'est pas nécessaire. Le sens de rotation du pignon moteur est compatible avec l'éjection de la feuille par le deuxième chemin de sortie vers le magasin de réception.

On a décrit une application du dispositif de commande. D'autres sont possibles, telle la commande par exemple d'un organe de verrouillage mobile entre deux positions.

## Revendications

1. Machine de traitement de feuilles de papier avec un système (100) de lecture ou d'impression recto-verso feuille à feuille comportant des moyens (108, 109, 21, 122, 123) d'entraînement des feuilles, un chemin, de traitement (110) relié à un chemin d'entrée (102) et une tête (104) de lecture ou d'impression, un premier chemin de sortie (106) en parallèle avec un deuxième chemin de sortie (103), un volet d'aiguillage (20) des feuilles soit vers le premier chemin de sortie, soit vers le deuxième chemin de sortie, **caractérisé par le fait que** le volet d'aiguillage (20) est commandé par un dispositif de commande du volet (20) basculant entre eux positions, lequel dispositif comprend un disque denté (3) de commande dudit volet (20), entraîné en rotation autour d'un premier axe (2) par un pignon moteur (21), tournant autour d'un second axe (8), par l'intermédiaire d'au moins un satellite (9,10) dudit pignon moteur (21), et engrenant sur le disque denté (3), le disque denté (3) comprenant au moins un évidemment (3a, 3b) formant dégagement de denture pour le satellite (9,10), le basculement depuis une position correspondant à l'engagement du satellite (9,10) dans l'évidemment (3a, 3b) vers l'autre position étant obtenu par inversion du sens de rotation du pignon moteur (21), désengagement du satellite (9,10) et engrènement du satellite (9,10) sur la denture du pignon moteur (21) jusqu'à venir s'engager dans le dit évidement, le pignon moteur (21) étant constitué par le moyen d'entraînement des feuilles vers l'un (103) ou l'autre (106) des dits chemins de sortie.

2. Machine selon la revendication 1 dans lequel le pignon moteur (21) est associé à deux pignons satellites (9,10) chacun engrenant avec le disque denté (3) selon le sens de rotation.

3. Machine selon la revendication 2 dans lequel le disque denté (3) comprend deux évidements (3 a, 3b) formant dégagements de denture correspondant chacun à une desdites positions.

4. Machine selon la revendication précédente, dans lequel le disque denté (3) est mobile entre deux butées (5, 6) et coopère avec un moyen ressort (12) pour le maintenir en appui stable contre une des butées (5,6).

5. Machine selon l'une des revendications précédentes avec système de lecture ou d'impression feuille à feuille comportant en outre un chemin de retour (105) entre le volet d'aiguillage (20) et le chemin d'entrée (102).

## Claims

1. Machine for processing sheets of paper comprising a system (100) for sheet-fed recto-verso reading or printing, comprising means (108, 109, 21, 122, 123) for carrying sheets, a processing path (110) connected to an input path (102) and a reading or printing head (104), a first output path (106) parallel to a second output path (103), a flap (20) for guiding the sheets either towards the first output path or the second output path, **characterised in that** the guiding flap (20) is controlled by a control device of the flap (20) which switches between two positions, which device comprises a toothed disc (3) for controlling said flap (20), driven in rotation about a first axle (2) by a motor pinion (21), turning about a second axle (8) by means of at least one planet gear (9, 10) of said motor pinion (21), and meshing with the toothed disc (3), the toothed disc (3) comprising at least one recess (3a, 3b) forming a tooth clearance for the planet gear (9, 10), the switching from one position corresponding to the engagement of the planet gear (9, 10) in the recess (3a, 3b) towards the other position being achieved by changing the direction of rotation of the motor pinion (21), disengagement of the planet gear (9, 10) and meshing of the planet gear (9, 10) with the teeth of the motor pinion (21) until it engages in said recess, said motor pinion (21) being formed by the means for carrying the sheets towards one (103) or the other (106) of said output paths.

2. Machine according to claim 1, wherein the motor pinion (21) is associated with two planet gears (9, 10) which each mesh with the toothed disc (3) in the direction of rotation.

3. Machine according to claim 2, wherein the toothed disc (3) comprises two recesses (3a, 3b) forming tooth clearances which each correspond to one of said positions.

4. Machine according to the preceding claim, wherein the toothed disc (3) is movable between two stops (5, 6) and cooperates with a spring means (12) to keep it supported against one of the stops (5, 6) in a stable manner.

5. Machine according to any of the preceding claims comprising a system for sheet-fed reading or printing, further comprising a return path (105) between the guiding flap (20) and the input path (102).

## Patentansprüche

1. Maschine zur Verarbeitung von Papierbögen mit einem beidseitigen Bogen-Lese oder Schreibsystem (100), aufweisend Mittel (108, 109, 21, 122, 123) für die Mitnahme der Bögen, einen Verarbeitungsweg (110), der mit einem Eintrittsweg (102) und einem Lese- oder Druckkopf (104) verbunden ist, einen ersten Austrittsweg (106) parallel zu einem zweiten Austrittsweg (103), eine Klappe zum Lenken (20) der Bögen entweder in Richtung des ersten Austrittsweges oder in Richtung des zweiten Austrittsweges, **dadurch gekennzeichnet, dass** die Lenkklappe (20) durch eine Vorrichtung für die Steuerung der zwischen zwei Positionen schwenkbaren Klappe (20) gesteuert wird, wobei die Vorrichtung eine Zahnscheibe (3) für die Steuerung der Klappe (20) umfasst, die zur Drehung um eine erste Achse (2) durch ein Antriebsritzel (21) angetrieben wird, das sich um eine zweite Achse (8), mit Hilfe mindestens eines Planetenrads (9, 10) des Antriebsritzels (21), dreht und in die Zahnscheibe (3) eingreift, wobei die Zahnscheibe (3) mindestens eine Ausnehmung (3a, 3b) aufweist, die eine Zahnungsaussparung für das Satellitenrad (9, 10) bildet, wobei die Verschwenkung aus einer Position, die dem Eingriff des Satellitenrads (9, 10) in die Ausnehmung (3a, 3b) entspricht, in die andere Position durch Umkehrung der Drehrichtung des Antriebsritzels (21), Ausgreifen des Satellitenrads (9, 10) und Eingreifen des Satellitenrads (9, 10) in die Zahnung des Antriebsritzels (21) erhalten wird, bis es in die Ausnehmung eingreift, wobei das Antriebsritzel (21) von dem Mittel für die Mitnahme der Bögen in Richtung des einen (103) oder des anderen (106) der Austrittswege gebildet ist.

2. Maschine nach Anspruch 1, wobei das Antriebsritzel (21) zwei Satellitenritzeln (9, 10) zugeordnet ist, die jeweils mit der Zahnscheibe (3) entsprechend der Drehrichtung in Eingriff sind.

3. Maschine nach Anspruch 2, wobei die Zahnscheibe (3) zwei Ausnehmungen (3a, 3b) umfasst, die Zahnungsaussparungen bilden, die jeweils einer der Positionen entsprechen.

4. Maschine nach dem vorhergehenden Anspruch, wobei die Zahnscheibe (3) zwischen zwei Anschlägen (5, 6) beweglich ist und mit einem Federmittel (12) zusammenwirkt, um sie in stabiler Abstützung gegen einen der Anschläge (5, 6) zu halten.

5. Maschine nach einem der vorhergehenden Ansprüche mit Bogen-Lese oder Schreibsystem, das ferner einen Rückführweg (105) zwischen der Lenkklappe (20) und dem Eintrittsweg (102) aufweist.
